# EUROPEAN PATENT SPECIFICATION

(11) **EP 3 802 249 B1**
(45) Date of publication and mention of the grant of the patent: **13.09.2023**
(21) Application number: 19731350.5
(22) Date of filing: 29.05.2019
(51) Int. Cl.: B60T 11/16, B60T 11/24

(54) **ACTUATION PUMP OF A BRAKING SYSTEM FOR VEHICLES, AND BRAKING SYSTEM FOR VEHICLES THEREOF**
BETÄTIGUNGSPUMPE EINER BREMSANLAGE FÜR FAHRZEUGE UND BREMSANLAGE FÜR FAHRZEUGE
POMPE D'ACTIONNEMENT D'UN SYSTÈME DE FREINAGE POUR VÉHICULES, ET SYSTÈME DE FREINAGE POUR VÉHICULES ASSOCIÉ

(30) Priority: 31.05.2018 IT 201800005911
(43) Date of publication of application: 14.04.2021
(73) Proprietor: BREMBO S.p.A., 24035 Curno (BERGAMO) (IT)
(72) Inventor: ARIENTI, Roberto, I-24035 Curno (BERGAMO) (IT); COMENDULI, Alberto, I-24035 Curno (BERGAMO) (IT); GUALANDRIS, Massimo, I-24035 Curno (BERGAMO) (IT)
(74) Representative: Mitola, Marco
(86) International application number: PCT/IB2019/054424
(87) International publication number: WO 2019/229659

(56) References cited:
- WO-A1-2018/035306
- US-A- 4 629 258
- US-A1- 2015 015 059
- US-A1- 2016 082 938

## Description

### SCOPE

The present invention relates to an actuation pump of a braking system for vehicles and to a braking system for vehicles thereof.

### BACKGROUND ART

In particular, the present invention relates to the field of actuation pumps and braking systems thereof for high-performance vehicles, e.g. in the field of racing.

In such a sector, the need is particularly felt to provide actuation pumps which guarantee rapid and effective braking and which are extremely light at the same time.

Rapid and effective braking means that the braking action required by the driver, by actuating a respective pedal, must be virtually instantaneous and without delays. It is indeed known that in rest condition of a braking system, the friction material supported by the pads, in the case of disc brakes, or by the shoes, in the case of drum brakes, is located at a given distance (albeit very limited) from disc or drum to be braked. Such a distance prevents undesired residual torque phenomena on the wheels which would generate noise as well as an albeit modest braking of the vehicle.

In the specific case of disc brakes, at the end of the braking action, the actuation pistons of the pads retract into the respective cylinders by an amount, generally named roll-back, such as to allow the detachment of the brake pads from the brake disc.

Therefore, in the passage from the rest condition to the successive working or braking condition, the pistons which act on the pads must firstly perform a first approaching stroke of the pads onto the braking band of the brake disc and, after having recovered the roll-back stroke, may apply the real braking action.

The roll-back stroke may even increase due to vibration and shocks which may occur during use in races, e.g. when the wheel strikes the elevated surface of a curb of a circuit.

The increase of idle or roll-back stroke generates an inevitable delay, albeit limited, between the actuation of the pedal and the beginning of the braking action itself.

For the purposes of improving performance and the driving feeling for the driver, this delay must be reduced as much as possible.

A way to reduce the idle stroke is to increase the volume of the brake fluid displaced by the actuation piston of the pump, so that the brake fluid volume needed to recover the idle stroke of the pads is displaced with a smaller stroke of the actuation piston itself.

The trade-off of this solution is that the actuation of the pedal becomes particularly stiff and, on the long run, difficult to operate.

There are also some solutions which envisage the making of so-called differential pumps which use a double piston inside having a smaller diameter and a greater diameter: the greater diameter portion is used to displace a greater volume of brake fluid in the initial step of braking, necessary to reduce the idle stroke quickly, while the smaller diameter portion, which comes into operation as a consequence of the deactivation of the larger diameter one, generates the real braking force without requiring excessive actuating effort by the user.

However, such solutions have the drawback of actuating the braking devices of only one axle of the vehicle and therefore require the presence of a double actuation pump, which inevitably increases the weight and the overall size of the braking system.

On the other hand, in the field of racing, the need is particularly felt to reduce the weights and the overall dimensions of vehicles, in order to improve overall performance: it is thus necessary to reduce also the overall weight of the braking system components as much as possible. Solutions according to the prior art are disclosed by US 2016/082938 A1, US 4629258 A, US2015/015059 A1, WO 2018/035306 A1.

### PRESENTATION OF THE INVENTION

The need is therefore increasingly felt to solve the drawbacks and limitations mentioned above with reference to the prior art. In other words, the need is felt to provide an actuation pump of a braking system which guarantees an extremely short idle stroke and which it is light and reliable at the same time.

Such a need is met by an actuation pump of a braking system for vehicles according to claim 1 and by a braking system for vehicles according to claim 11.

In particular, such a need is met by an actuation pump of a braking system for vehicles comprising:
- a pump body which identifies a direct actuation chamber and an indirect actuation chamber filled with brake fluid and in series with each other,
- wherein the direct actuation chamber houses a direct piston connected to a manual actuation member, and is fluidically connected to a first delivery line which can be connected to at least one first braking device,
- wherein the direct actuation chamber houses an indirect piston, mechanically separate from the direct piston, and having a first end facing the direct piston and a second end sealingly defining the indirect actuation chamber,

- wherein the indirect actuation chamber is fluidically connected in output to a second delivery line which can be connected to at least one second braking device,
- and wherein the indirect piston comprises a first and a second head sealingly sliding along a lateral guide wall of the indirect actuation chamber, the first head having a greater diameter than the second head and being arranged on the side of the second end, the second head facing the second delivery line, on the side opposite the second end,
- wherein the indirect piston divides the indirect actuation chamber into an intermediate volume, between the first and second head, and into a delivery volume, comprised between the second head and the second delivery line,
- wherein the indirect piston is provided with a control valve calibrated so that, below a threshold pressure value in the indirect actuation chamber, it fluidically connects the intermediate volume and the delivery volume to each other, and upon reaching said pressure threshold value, fluidically disconnects said volumes and prevents such threshold value being exceeded in the intermediate volume.

According to a possible embodiment, the control valve is at least partially housed inside a stem which mechanically connects the first head and the second head to each other.

According to a possible embodiment, the control valve comprises a safety valve which prevents the fluid flow from the delivery volume towards the intermediate volume.

According to a possible embodiment, the control valve comprises a release valve calibrated to open when said threshold value is reached, so that, in the open configuration, it allows the passage of fluid from the intermediate volume towards a volume or tank for the recirculation of said fluid.

According to a possible embodiment, said intermediate and delivery volumes have respective lateral guide walls counter-shaped with respect to the first and second heads respectively and in which the indirect actuation chamber, at a transition between the intermediate volume and the delivery volume, comprises an internal shoulder.

According to a possible embodiment, first and second elastic return means are provided in the indirect actuation chamber, which the first elastic return means bias the first head of the indirect piston and the second elastic return means bias the control valve.

According to a possible embodiment, the first elastic means rest against said inner shoulder.

According to a possible embodiment, the second elastic return means are at least partially inserted in a cavity of the indirect piston.

According to a possible embodiment, an elastic spacer is placed inside the direct actuation chamber to apply a reciprocal elastic distancing action between the direct piston and the indirect piston.

According to a possible embodiment, the pump body comprises a first body which defines the direct actuation chamber and a second body which defines the indirect actuation chamber, said first and second bodies being coaxial and sealingly joined together in a main axial direction X-X.

The present invention further relates to a braking system comprising:
- an actuation pump according to any of the preceding claims,
- at least one first braking device fluidically connected to the first delivery line,
- at least one second braking device fluidly connected to the second delivery line.

According to a possible embodiment, said first and second braking devices are arranged on separate axles of an associable vehicle.

According to a possible embodiment, said first and second braking devices comprise disc and/or drum brakes.

The present invention further relates to a vehicle comprising:
a pair of first braking devices fluidically connected to the first delivery line,
a pair of second braking devices fluidically connected to the second delivery line,
wherein the first braking devices are associated with wheels of a rear axle of the vehicle,
wherein the second braking devices are associated with wheels of a front axle of the vehicle.

### DESCRIPTION OF THE DRAWINGS

Further features and advantages of the present invention will be more comprehensible from the following description of preferred embodiments given by way of nonlimiting examples, in which:

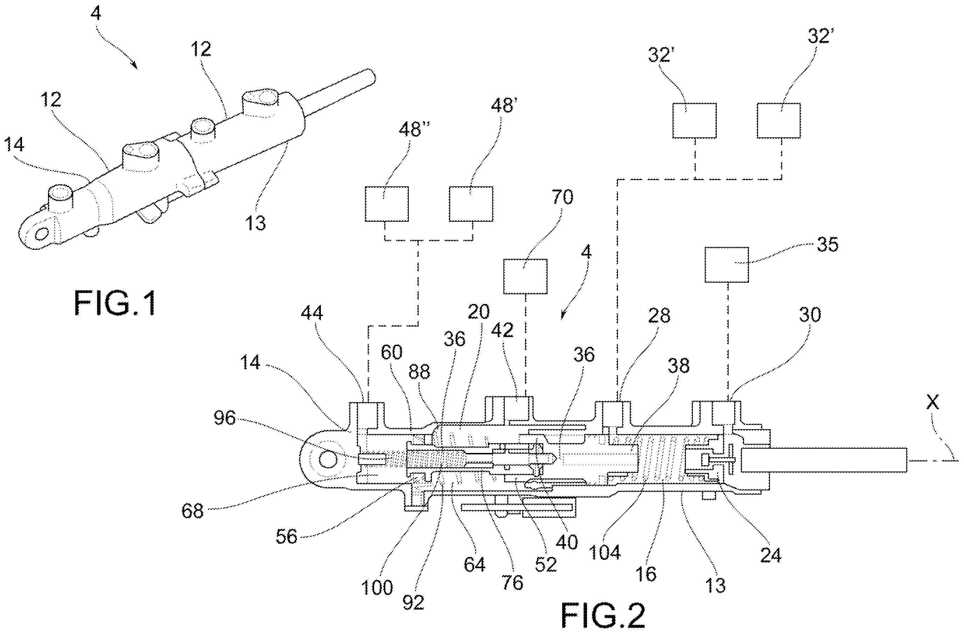

figure 1 is a perspective view of an actuation pump of a braking system for vehicles according to the preferred embodiment of the present invention;
figure 2 is a section view of the actuation pump of a braking system for vehicles in figure 1;

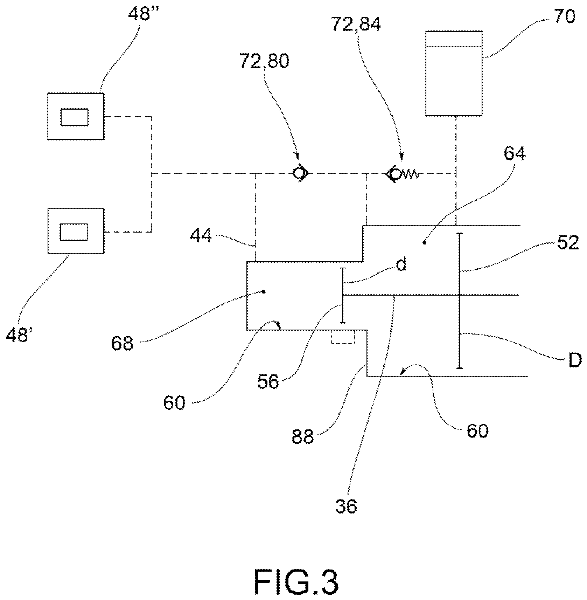

figure 3 is a diagrammatic view of a portion of an actuation pump of a braking system for vehicles according to the preferred embodiment of the present invention;
figure 4 is a diagrammatic view of a portion of the actuation pump of figure 3, in a first step of braking, in which the delivery pressure of the pump is lower than a threshold value;
figure 5 is a diagrammatic view of a portion of the actuation pump of figure 3, in a second step of braking in which the pump delivery pressure exceeds a threshold value.

Elements or parts in common to the embodiments described below will be indicated using the same reference numerals.

### DETAILED DESCRIPTION

With reference to the aforementioned figures, reference numeral 4 indicates an actuation pump for a braking system 8 for vehicles as a whole.

For the purposes of the present invention, vehicles are both cars and motorcycles.

The actuation pump 4 of a braking system for vehicles comprises a pump body 12 which identifies a direct actuation chamber 16 and an indirect actuation chamber 20 filled with brake fluid and in series with each other.

According to an embodiment, the pump body 12 is not in one piece, but which comprises a first body 13 which delimits the direct actuation chamber 16 and a second body 14 which delimits the indirect actuation chamber 20.

Said first and second pump body 13,14 are coaxial and associated with a seal between them along a prevalent axial direction X-X.

The direct actuation chamber 16 houses a direct piston 24 connected to a manual actuation member, not shown, such as a lever or a pedal.

The connection with the manual actuation member can be mechanical or direct, but also indirect, e.g. in brake-by-wire type applications.

The direct actuation chamber 16 is fluidically connected to a first delivery 28 which can be connected to at least one first braking device 32'.

The direct actuation chamber 16 receives brake fluid through a first inlet 30, in turn fluidically connected to a first brake fluid tank 35.

The first braking device 32' may be single or, in the case of applications on cars, it may be constituted by a pair of first braking devices 32',32", preferably associated with the wheels located on the same vehicle axle.

Preferably, the first braking devices 32', 32" are associated with wheels located on the rear axle of the vehicle,

Typically, the first braking devices 32' 32" comprise disc or drum brakes.

The direct actuation chamber 16 houses an indirect piston 36, mechanically separate from the direct piston 24, and having a first end 38 facing the direct piston 24 and a second end 40 sealingly defining the indirect actuation chamber 20.

The indirect actuation chamber 20 is, in turn, fluidically connected in output to a second delivery 44 which can be connected to at least one second braking device 48'.

The indirect actuation chamber 16 receives brake fluid through a second inlet 42, in turn fluidly connected to a second brake fluid tank 70.

The second braking device 48' may be single or, in case of applications on cars, it may be constituted by a pair of second braking devices 48',48", preferably associated with the wheels placed on the same vehicle axle.

Preferably, the second braking devices 48', 48" are associated with wheels located on the rear axle of the vehicle,

Typically, the second braking devices 48',48" comprise disc or drum brakes.

The indirect piston 36 comprises a first and a second head 52,56 sealingly sliding along a lateral guide wall 60 of the indirect actuation chamber 20.

The first head 52 has a diameter D greater than the diameter d of the second head 56 and is arranged on the side of the second end 40.

The second head 56 faces the second delivery line 44, on the side opposite to the second end 40.

The indirect piston 36 divides the indirect actuation chamber 20 into an intermediate volume 64, between the first and second head 52,56, and into a delivery volume 68, comprised between the second head 56 and the second delivery line 44.

Advantageously, the indirect piston 36 is provided with a control valve 72 calibrated so that, below a threshold value of the pressure in the indirect actuation chamber 20, it fluidly connects the intermediate volume 64 and the delivery volume 68 to each other. By way of example only, said pressure threshold value may be equal to 5 bar.

Furthermore, upon the reaching of said threshold pressure value, the control valve 72 fluidically disconnects said intermediate volume 64 and said delivery volume 68 and prevents exceeding such threshold value in the intermediate volume 64.

According to a possible embodiment, the control valve 72 is at least partially housed inside a stem 76 of the indirect piston 36 which mechanically connects the first head and the second head 52,56 to each other.

According to a possible embodiment, the control valve 72 comprises a safety valve 80 which prevents the flow of fluid from the delivery volume 68 towards the intermediate volume 64.

According to an embodiment, the control valve 72 comprises a release valve 72,84 calibrated to open when said threshold value is reached, so that, in the open configuration, the passage of fluid is allowed from the intermediate volume 64 towards the second brake fluid tank 70.

As seen, the first and the second head 52,56 slide axially along a prevalent axial direction X-X, towards the inside of the indirect actuation chamber 20.

Preferably, said intermediate and delivery 64,68 volumes have respective lateral guide walls 60 counter-shaped with respect to the first and second head 52,56 respectively.

Typically, the heads 52,56 have cylindrical circular cross-section with respect to a section plane perpendicular to said prevalent axial direction X-X.

According to an embodiment, the indirect actuation chamber 20, at a transition between the intermediate volume 64 and the delivery volume 68, comprises an internal shoulder 88.

First and second elastic return means 92, 96 are provided in the indirect actuation chamber 20.

In particular, the first elastic return means 92 and the second elastic return means 96 bias the first head 52 of the indirect piston 36 so as to take it back to the rest position, following the release of the brake.

For example, the first elastic return means 92 will rest against the inner shoulder 88.

For example, the second elastic return means 96 are at least partially inserted in a cavity 100 of the indirect piston 36.

Preferably, there is an elastic spacer 104 inside the direct actuation chamber 16 which applies an elastic reciprocal distancing action between the direct piston 24 and the indirect piston 36.

Said elastic spacer 104, for example comprising a helical spring, has the function of returning the direct piston to rest position upon release of the brake control.

The operation of an actuation pump of a braking system for vehicles according to the present invention will now be described.

In particular, in case of braking request, the user generates a request for braking action by means of the manual actuation control, either a lever or a pedal.

In this manner, the direct piston 24 translates towards the first delivery 28, whereby overcoming the elastic return action of the elastic spacer 104 and pressurizing the braking fluid inside the direct actuation chamber 16.

Such a pressurized fluid actuates the first braking device 32' (or of the first braking devices 36',36") through the first delivery 28.

At the same time, the pressurized brake fluid in the direct actuation chamber 16 applies a thrust action on the first head 52 of indirect piston 36 which moves towards the respective second delivery 44, whereby overcoming the elastic return action of the first elastic return means 92.

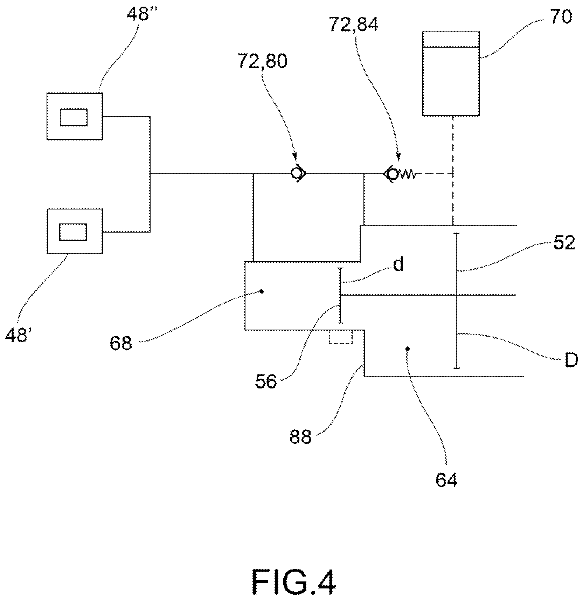

In this manner, until the predefined threshold value pressure is reached (figure 4), both the first head 52 and the second head 56 apply thrust action of the brake fluid contained in the intermediate volume 64 and in delivery volume 68, respectively. Obviously, the pressure being equal, the thrust action of the first head 52 having a larger diameter prevails: in this manner, the pressure being equal, the displacement of a greater volume of brake fluid is obtained which will be sent through the second delivery 44 to the second braking device 48' (or to the second braking devices 48").

In such operating condition, the safety valve 80 is opened while the release valve 84 is closed.

In this step, the initial clearance of the braking devices, e.g. the roll-back, can be recovered very quickly and therefore a very rapid braking action is obtained.

At the same time, the manual actuation control is comfortable to use for the user because the pressure values, lower than the predetermined threshold value, do not require excessive efforts.

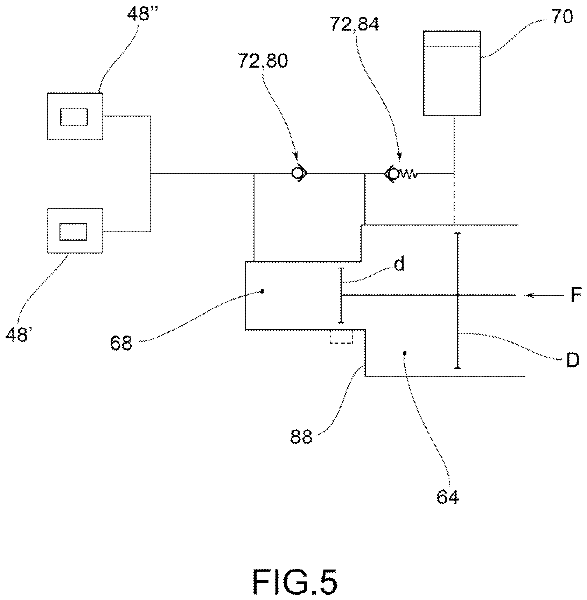

At the moment in which the threshold pressure value is reached (Figure 5), the safety valve 80 closes and the release valve 84 is opened.

In this manner, the second head 56 of the indirect piston 36 continues to actuate the second braking devices 48',48" with an effort by the user which is more progressive because the second head 56 has a smaller thrust area than that of the first head 52 which, as seen, prevails until the threshold pressure value is reached. At the same time, the opening of the release valve 84 allows the discharge of the brake fluid in the second brake fluid tank 70 so that the pressure in the intermediate volume 64 is increased and remains fixed to the threshold value.

In this manner, as seen, the first head 52 stops actuating the second braking devices 48',48" which are instead controlled by the more progressive action of the second head 56 of the indirect piston 36.

Obviously, in the first direct actuation chamber 16 the pressure value always increases as a function of the axial displacement of the direct piston 24.

When the threshold pressure value is exceeded, a particularly fast braking action (tiring for the driver) is not even required, because the clearance was recovered and the braking action is already underway: a slower but also more precise incremental action of braking is needed instead to allow calibrating the vehicle braking effectively.

As can be appreciated from the description above, the actuation pump of a braking system for vehicles according to the invention makes it possible to overcome the drawbacks presented in the prior art.

In particular, the actuation pump ensures a particularly short idle stroke and therefore very fast response to the user's action on the brake control.

At the same time, the actuation pump isn't excessively hard to operate by virtue of the presence of the indirect piston fitted with double head having different diameter.

The presence of a single pump body also makes it possible to reduce the overall weight of the braking system which does not require the presence of two distinct pump bodies to implement the actuation of the braking devices on different axles of the vehicle.

A person skilled in the art can make numerous changes and variants to the actuation pumps of the braking systems for vehicles described above, all included within the scope of protection defined by the following claims in order to satisfy contingent, specific needs.

## Claims

1. Actuation pump (4) of a braking system for vehicles (8), comprising
- a pump body (13, 14) which identifies a direct actuation chamber (16) and an indirect actuation chamber (20) filled with brake fluid and in series with each other,
- wherein the direct actuation chamber (16) houses a direct piston (24) connected to a manual actuation member, and is fluidically connected to a first delivery line (28) connectable to at least a first braking device (32),
- wherein the direct actuation chamber (16) houses an indirect piston (36), mechanically separate from the direct piston (24), and having a first end (38) facing the direct piston (24) and a second end (40) sealingly defining the indirect actuation chamber (20),
- wherein the indirect actuation chamber (20) is fluidically connected in output to a second delivery line (44) connectable to at least a second braking device (48),
- and **characterized in that** the indirect piston (36) comprises a first and a second head (52,56) sealingly sliding along a lateral guide wall (60) of the indirect actuation chamber (20), the first head (52) having a greater diameter than the second head (56) and being arranged on the side of the second end (40), the second head (56) facing the second delivery line (44), on the side opposite the second end (40),
- wherein the indirect piston (36) divides the indirect actuation chamber (20) into an intermediate volume (64), between the first and second head (52,56), and into a delivery volume (68), comprised between the second head (56) and the second delivery line (44),
- wherein the indirect piston (36) is provided with a control valve (72) calibrated so that, below a threshold pressure value in the indirect actuation chamber (20), it fluidically connects the intermediate volume (64) and the delivery volume (68) to each other, and upon reaching said pressure threshold value, fluidically disconnects said intermediate volume (64) and delivery volume (68) and prevents such threshold value being exceeded in the intermediate volume (64).

2. Actuation pump (4) of a vehicle braking system (8) according to claim 1, wherein the control valve (72) is at least partially housed inside a stem (76) which mechanically connects the first head (52) and the second head (56) to each other.

3. Actuation pump (4) of a vehicle braking system (8) according to claim 1 or 2, wherein the control valve (72) comprises a safety valve (80) which prevents the flow of fluid from the delivery volume (68) towards the intermediate volume (64).

4. Actuation pump (4) of a vehicle braking system (8) according to claim 1, 2 or 3, wherein the control valve (72) comprises a release valve (84) calibrated to open when said threshold value is reached, so that, in the open configuration, it allows the passage of fluid from the intermediate volume (64) towards a volume or tank for the recirculation of said fluid.

5. Actuation pump (4) of a vehicle braking system (8) according to any one of the preceding claims, wherein said intermediate (64) and delivery (68) volumes have respective lateral guide walls (60) counter-shaped to the first and second heads (52,56) respectively and in which the indirect actuation chamber (20), at a transition between the intermediate volume (64) and the delivery volume (68), comprises an internal shoulder (88).

6. Actuation pump (4) of a vehicle braking system (8) according to any one of the claims 1 to 5, wherein in the indirect actuation chamber (20) first and second elastic return means are provided (92,96) that influence the first head (52) of the indirect piston (36) so as to bring it back to the rest position, following the release of the brake.

7. Actuation pump (4) of a vehicle braking system (8) according to claim 6 in combination with claim 5, wherein the first elastic return means (92) rest against said internal shoulder (88).

8. Actuation pump (4) of a vehicle braking system (8) according to any one of Claims 6 to 7, wherein said second elastic return means (96) are at least partially inserted in a cavity (100) of the indirect piston (36).

9. Actuation pump (4) of a vehicle braking system (8) according to any one of the preceding claims, wherein inside the direct actuation chamber (16) an elastic spacer (104) is placed which exerts an elastic action of reciprocal distancing between the direct piston (24) and the indirect piston (36).

10. Actuation pump (4) of a vehicle braking system (8) according to any of the preceding claims, wherein the pump body (12) comprises a first body (13) which defines the direct actuation chamber (16) and a second body (14) which defines the indirect actuation chamber (20), said first and second bodies (13,14) being coaxial and sealingly joined together in a main axial direction (X-X) .

11. Braking system for vehicles (8) comprising:
- an actuation pump (4) according to any of the preceding claims,
- at least a first braking device (32') fluidically connected to the first delivery line (28),
- at least a second braking device (32") fluidly connected to the second delivery line (44).

12. Braking system (8) according to claim 11, wherein said first and second braking devices (32', 32") are arranged on separate axles of an associable vehicle.

13. Braking system (8) according to claim 11 or 12, wherein said first and second braking devices (32', 32") comprise disc and / or drum brakes.

14. Vehicle comprising a braking system according to any one of claims 1 to 13, provided with:
- a pair of first braking devices (32') fluidically connected to the first delivery line (28),
- a pair of second braking devices (32") fluidically connected to the second delivery line (44),
wherein the first braking devices (32') are associated with wheels of a rear axle of the vehicle,
wherein the second braking devices (32") are associated with wheels of a front axle of the vehicle.

## Patentansprüche

1. Betätigungspumpe (4) eines Bremssystems für Fahrzeuge (8), umfassend:
- einen Pumpenkörper (13, 14), welcher eine direkte Betätigungskammer (16) und eine indirekte Betätigungskammer (20) identifiziert, welche mit Bremsfluid gefüllt und in Reihe miteinander sind,
- wobei die direkte Betätigungskammer (16) einen direkten Kolben (24) aufnimmt, welcher mit einem manuellen Betätigungselement verbunden ist und fluidisch mit einer ersten Lieferleitung (28) verbunden ist, welche mit wenigstens einer ersten Bremsvorrichtung (32) verbindbar ist,
- wobei die direkte Betätigungskammer (16) einen indirekten Kolben (36) aufnimmt, welcher mechanisch separat von dem direkten Kolben (24) ist und ein erstes Ende (38) zu dem direkten Kolben (24) weisend und ein zweites Ende (40) abdichtend die indirekte Betätigungskammer (20) definierend aufweist,
- wobei die indirekte Betätigungskammer (20) fluidisch in Ausgabe zu einer zweiten Lieferleitung (44) verbunden ist, welche mit wenigstens einer zweiten Bremsvorrichtung (48) verbindbar ist,
- und **dadurch gekennzeichnet, dass** der indirekte Kolben (36) einen ersten und einen zweiten Kopf (52, 56) umfasst, welche abdichtend entlang einer lateralen Führungswand (60) der indirekten Betätigungskammer (20) gleiten, wobei der erste Kopf (52) einen größeren Durchmesser als der zweite Kopf (56) aufweist und an der Seite des zweiten Endes (40) angeordnet ist, wobei der zweite Kopf (56) zu der zweiten Lieferleitung (44) an der Seite gegenüber dem zweiten Ende (40) weist,
- wobei der indirekte Kolben (36) die indirekte Betätigungskammer (20) in ein Zwischenvolumen (64) zwischen dem ersten und zweiten Kopf (52, 56) und in ein Liefervolumen (68) unterteilt, welches zwischen dem zweiten Kopf (56) und der zweiten Lieferleitung (44) aufgenommen ist,
- wobei der indirekte Kolben (36) mit einem Steuerventil (72) bereitgestellt ist, welches derart kalibriert ist, dass es unterhalb eines Schwellen-Druckwerts in der indirekten Betätigungskammer (20) fluidisch das Zwischenvolumen (64) und das Liefervolumen (68) miteinander verbindet und auf ein Erreichen des Druck-Schwellenwerts hin das Zwischenvolumen (64) und das Liefervolumen (68) fluidisch trennt und verhindert, dass ein solcher Schwellenwert in dem Zwischenvolumen (64) überschritten wird.

2. Betätigungspumpe (4) eines Fahrzeug-Bremssystems (8) nach Anspruch 1, wobei das Steuerventil (72) wenigstens teilweise innerhalb einer Stange (76) aufgenommen ist, welche den ersten Kopf (52) und den zweiten Kopf (56) mechanisch miteinander verbindet.

3. Betätigungspumpe (4) eines Fahrzeug-Bremssystems (8) nach Anspruch 1 oder 2, wobei das Steuerventil (72) ein Sicherheitsventil (80) umfasst, welches das Strömen des Fluids von dem Liefervolumen (68) in Richtung des Zwischenvolumens (64) verhindert.

4. Betätigungspumpe (4) eines Fahrzeug-Bremssystems (8) nach Anspruch 1, 2 oder 3, wobei das Steuerventil (72) ein Entlastungsventil (84) umfasst, welches dazu kalibriert ist, sich zu öffnen, wenn der Schwellenwert erreicht wird, so dass es in der offenen Konfiguration den Durchgang von Fluid von dem Zwischenvolumen (64) in Richtung eines Volumens oder Tanks für das Rezirkulieren des Fluids erlaubt.

5. Betätigungspumpe (4) eines Fahrzeug-Bremssystems (8) nach einem der vorhergehenden Ansprüche, wobei die Zwischen- (64) und Liefer- (68) Volumen jeweilige laterale Führungswände (60) aufweisen, welche jeweils entgegengesetzt zu den ersten und zweiten Köpfen (52, 56) geformt sind und in welchen die indirekte Betätigungskammer (20) bei einem Übergang zwischen dem Zwischenvolumen (64) und dem Liefervolumen (68) eine innere Schulter (88) umfasst.

6. Betätigungspumpe (4) eines Fahrzeug-Bremssystems (8) nach einem der Ansprüche 1 bis 5, wobei in der indirekten Betätigungskammer (20) erste und zweite elastische Rückstellmittel bereitgestellt sind (92, 96), welche den ersten Kopf (52) des indirekten Kolbens (36) derart beeinflussen, dass er dem Freigeben der Bremse folgend zurück zu der Ruheposition gebracht wird.

7. Betätigungspumpe (4) eines Fahrzeug-Bremssystems (8) nach Anspruch 6 in Kombination mit Anspruch 5, wobei die ersten elastischen Rückstellmittel (92) gegen die innere Schulter (88) ruhen.

8. Betätigungspumpe (4) eines Fahrzeug-Bremssystems (8) nach einem der Ansprüche 6 bis 7, wobei die zweiten elastischen Rückstellmittel (96) wenigstens teilweise in einem Hohlraum (100) des indirekten Kolbens (36) eingesetzt sind.

9. Betätigungspumpe (4) eines Fahrzeug-Bremssystems (8) nach einem der vorhergehenden Ansprüche, wobei innerhalb der direkten Betätigungskammer (16) ein elastisches Abstandselement (104) platziert ist, welches eine elastische Wirkung eines reziproken Distanzierens zwischen dem direkten Kolben (24) und dem indirekten Kolben (36) ausübt.

10. Betätigungspumpe (4) eines Fahrzeug-Bremssystems (8) nach einem der vorhergehenden Ansprüche, wobei der Pumpenkörper (12) einen ersten Körper (13), welcher die direkte Betätigungskammer (16) definiert, und einen zweiten Körper (14) umfasst, welcher die indirekte Betätigungskammer (20) definiert, wobei die ersten und zweiten Körper (13, 14) koaxial sind und abdichtend miteinander in einer axialen Hauptrichtung (X-X) gekoppelt sind.

11. Bremssystem für Fahrzeuge (8), umfassend:
- eine Betätigungspumpe (4) nach einem der vorhergehenden Ansprüche,
- wenigstens eine erste Bremsvorrichtung (32`), welche mit der ersten Lieferleitung (28) fluidisch verbunden ist,
- wenigstens eine zweite Bremsvorrichtung (32"), welche mit der zweiten Lieferleitung (44) fluidisch verbunden ist.

12. Bremssystem (8) nach Anspruch 11, wobei die ersten und zweiten Bremsvorrichtungen (32', 32") an separaten Achsen eines zuordenbaren Fahrzeugs angeordnet sind.

13. Bremssystem (8) nach Anspruch 11 oder 12, wobei die ersten und zweiten Bremsvorrichtungen (32', 32") Scheiben- und/oder Trommelbremsen umfassen.

14. Fahrzeug, umfassend ein Bremssystem nach einem der Ansprüche 1 bis 13, bereitgestellt mit:
- einem Paar von ersten Bremsvorrichtungen (32`), welche fluidisch mit der ersten Lieferleitung (28) verbunden sind,
- einem Paar von zweiten Bremsvorrichtungen (32"), welche fluidisch mit der zweiten Lieferleitung (44) verbunden sind,
wobei die ersten Bremsvorrichtungen (32`) Rädern einer Hinterachse des Fahrzeugs zugeordnet sind,
wobei die zweiten Bremsvorrichtungen (32") Rädern einer Vorderachse des Fahrzeugs zugeordnet sind.

## Revendications

1. Pompe d'actionnement (4) d'un système de freinage pour véhicules (8), comprenant
- un corps de pompe (13, 14), qui identifie une chambre d'actionnement direct (16) et une chambre d'actionnement indirect (20) remplies d'un liquide de frein et en série l'une avec l'autre,
- dans laquelle la chambre d'actionnement direct (16) loge un piston direct (24) relié à l'élément d'actionnement manuel et est reliée en communication fluidique à une première ligne de distribution (28) pouvant être reliée à au moins un premier dispositif de freinage (32),
- dans laquelle la chambre d'actionnement direct (16) loge un piston indirect (36) séparé mécaniquement du piston direct (24) et comprenant une première extrémité (38) faisant face au piston direct (24) et une deuxième extrémité (40) définissant de manière étanche la chambre d'actionnement indirect (20),
- dans laquelle la chambre d'actionnement indirect (20) est reliée en communication fluidique en sortie à une deuxième ligne de distribution (44) pouvant être reliée à au moins un deuxième dispositif de freinage (48),
- et **caractérisée en ce que**
le piston indirect (36) comprend une première et une deuxième tête (52, 56) coulissant de manière étanche le long d'une paroi de guidage latérale (60) de la chambre d'actionnement indirect (20), la première tête (52) ayant un diamètre plus grand que la deuxième tête (56) et étant disposée sur le côté de la deuxième extrémité (40), la deuxième tête (56) faisant face à la deuxième ligne de distribution (44) sur le côté opposé à la deuxième extrémité (40),
- dans laquelle le piston indirect (36) divise la chambre d'actionnement indirect (20) en un volume intermédiaire (64) entre la première et la deuxième tête (52, 56) et en un volume de distribution (68) compris entre la deuxième tête (56) et la deuxième ligne de distribution (44),
- dans laquelle le piston indirect (36) est doté d'une soupape de commande (72) étalonnée de telle sorte que, en dessous d'une valeur de pression de seuil dans la chambre d'actionnement indirect (20), il relie en communication fluidique le volume intermédiaire (64) et le volume de distribution (68) l'un à l'autre, et, une fois ladite valeur de seuil de pression atteinte, il déconnecte de manière fluidique ledit volume intermédiaire (64) et le volume de distribution (68) et empêche le dépassement d'une telle valeur de seuil dans le volume intermédiaire (64).

2. Pompe d'actionnement (4) d'un système de freinage de véhicule (8) selon la revendication 1, dans laquelle la soupape de commande (72) est logée au moins en partie à l'intérieur d'une tige (76), qui relie mécaniquement la première tête (52) et la deuxième tête (56) l'une à l'autre.

3. Pompe d'actionnement (4) d'un système de freinage de véhicule (8) selon la revendication 1 ou 2, dans laquelle la soupape de commande (72) comprend une soupape de sécurité (80) qui empêche le fluide de s'écouler depuis le volume de distribution (68) vers le volume intermédiaire (64).

4. Pompe d'actionnement (4) d'un système de freinage de véhicule (8) selon la revendication 1, 2 ou 3, dans laquelle la soupape de commande (72) comprend une soupape de libération (84) étalonnée pour s'ouvrir lorsque ladite valeur de seuil est atteinte de sorte que, dans la configuration ouverte, elle permet le passage de fluide depuis le volume intermédiaire (64) vers un volume ou un réservoir pour la recirculation dudit fluide.

5. Pompe d'actionnement (4) d'un système de freinage de véhicule (8) selon l'une quelconque des revendications précédentes, dans laquelle lesdits volumes intermédiaire (64) et de distribution (68) comprennent respectivement des parois de guidage latérales (60) de forme complémentaire par rapport aux première et deuxième têtes (52, 56) respectivement et dans laquelle la chambre d'actionnement indirect (20) comprend, sur une transition entre le volume intermédiaire (64) et le volume de distribution (68), un épaulement interne (88).

6. Pompe d'actionnement (4) d'un système de freinage de véhicule (8) selon l'une quelconque des revendications 1 à 5, dans laquelle sont fournis, dans la chambre d'actionnement indirect (20), des premiers et deuxièmes moyens de rappel élastiques (92, 96), qui influent sur la première tête (52) du piston indirect (36) de manière à la ramener dans la position de repos après le relâchement du frein.

7. Pompe d'actionnement (4) d'un système de freinage de véhicule (8) selon la revendication 6 en combinaison avec la revendication 5, dans laquelle les premiers moyens de rappel élastiques (92) reposent contre ledit épaulement interne (88).

8. Pompe d'actionnement (4) pour un système de freinage de véhicule (8) selon l'une quelconque des revendications 6 à 7, dans laquelle lesdits deuxièmes moyens de rappel élastiques (96) sont au moins en partie insérés dans une cavité (100) du piston indirect (36).

9. Pompe d'actionnement (4) d'un système de freinage de véhicule (8) selon l'une quelconque des revendications précédentes, dans laquelle est placé à l'intérieur de la chambre d'actionnement direct (16) un élément intercalaire élastique (104), qui exerce une action élastique d'espacement réciproque entre le piston direct (24) et le piston indirect (36).

10. Pompe d'actionnement (4) d'un système de freinage de véhicule (8) selon l'une quelconque des revendications précédentes, dans laquelle le corps de pompe (12) comprend un premier corps (13) qui définit la chambre d'actionnement direct (16) et un deuxième corps (14) qui définit la chambre d'actionnement indirect (20), lesdits premier et deuxième corps (13, 14) étant joints de manière coaxiale et de manière étanche ensemble dans une direction axiale principale (X-X).

11. Système de freinage pour véhicules (8) comprenant :
- une pompe d'actionnement (4) selon l'une quelconque des revendications précédentes,
- au moins un premier dispositif de freinage (32') relié en communication fluidique à la première ligne de distribution (28),
- au moins un deuxième dispositif de freinage (32") relié en communication fluidique à la deuxième ligne de distribution (44).

12. Système de freinage (8) selon la revendication 11, dans lequel lesdits premier et deuxième dispositifs de freinage (32', 32") sont disposés sur des essieux séparés d'un véhicule pouvant être associé.

13. Système de freinage (8) selon la revendication 11 ou 12, dans lequel lesdits premier et deuxième dispositifs de freinage (32', 32") comprennent un disque et/ou des freins à tambour.

14. Véhicule comprenant un système de freinage selon l'une quelconque des revendications 1 à 13, doté de :
- une paire de premiers dispositifs de freinage (32') reliée en communication fluidique à la première ligne de distribution (28),
- une paire de deuxièmes dispositifs de freinage (32") reliée en communication fluidique à la deuxième ligne de distribution (44),
dans lequel les premiers dispositifs de freinage (32') sont associés à des roues d'un essieu arrière du véhicule,
dans lequel les deuxièmes dispositifs de freinage (32") sont associés à des roues d'un essieu avant du véhicule.
